# EUROPEAN PATENT APPLICATION

(11) **EP 0 919 123 A1**
(43) Date of publication of application: **02.06.1999**
(21) Application number: 97500199.1
(22) Date of filing: 20.11.1997
(51) Int. Cl.: A01K 93/00

(54) **Fishing float**

(71) Applicant: Fernandez Gregori, Alfonso, 08190 Sant Cugat del Vallès (Barcelona) (ES); Diaz Castro, Abel, 08190 Sant Cugat del Vallès (Barcelona) (ES); Suja Duran, Juan Carlos, 08190 Sant Cugat del Vallès (Barcelona) (ES)
(72) Inventor: Fernandez Gregori, Alfonso, 08190 Sant Cugat del Vallès (Barcelona) (ES); Diaz Castro, Abel, 08190 Sant Cugat del Vallès (Barcelona) (ES); Suja Duran, Juan Carlos, 08190 Sant Cugat del Vallès (Barcelona) (ES)
(74) Representative: Ponti Sales, Adelaida

(57) **Abstract**

Comprises means of traction on the hook in order to retain any fish which bites on the hook. Said means comprise a bushing (3) which moves with respect to the float (1), stretching the line which secures the hook.

The fisherman can cast out the line and then pay no further attention to the float, since the float itself will pull on the line when the latter is first subjected to traction by a fish.

## Description

The present invention relates to a float for fishing which entails a substantial improvement in terms of quality and reliability.

### BACKGROUND OF THE INVENTION

It is known that fishing with rod and line requires the fisherman to possess, on the one hand, a goodly measure of patience and, on the other, good reflexes in order to know the moment when the fishing line must be drawn in (to "strike").

The use of floats for fishing is a solution which has long been adopted by fishermen, because the float helps to concentrate the attention of a fisherman on a single specific point. A fisherman can thus concentrate better and speed up his reflexes.

In most cases, however, the rapidity required to pull in the line at the right moment cannot be achieved, since it is necessary to react in fractions of a second.

### DESCRIPTION OF THE INVENTION

The float of the invention provides a solution to the aforesaid disadvantages, while presenting other advantages which will be described below.

The fishing float of the invention includes a body by way of floating part, underneath which can be fitted a hook with its corresponding line, and is characterized in that it comprises means of traction on the hook in order to retain any fish which bites on the hook.

Thanks to this characteristic, the fisherman can cast out the line and then pay no further attention to the float, since the float itself will pull on the line when the latter is first subjected to traction by a fish. To this advantage is added the fact that with this type of float one fisherman can have several rods at once with lines cast out, which was until now impossible when fishing with a float and not at a distance.

Advantageously, the means of traction on the hook comprise a device which moves with respect to the float.

Thanks to this characteristic, when a fish gives the first pull on the bait the device is triggered, leading to a sudden traction force on the hook, which moves vertically a few centimetres. The hook thus penetrates deeply and securely into the mouth of the fish, making escape of the latter almost impossible.

Preferably, the device which is movable with respect to the float comprises a bushing, a first elastic element which attaches said bushing to the body of the float, a stem with its upper end conically shaped, a ball, a second elastic element, and an element for securing the line of the hook.

Advantageously, the body by way of floating part has an orifice which can house a ball, with which the means of traction on the hook can be kept activated in a stable manner.

Also advantageously, the bushing has an orifice which can house the ball.

Thanks to these characteristics, when the retaining means are activated they are kept in a stable position due to insertion of the spheroidal element between the sections formed by the body by way of floating part and the bushing.

Preferably, the first elastic element is attached, by its upper end, to the body of the float and, by its lower end, to the upper part of the bushing.

Thanks to this characteristic, the sudden ascent of the bushing when a fish bites is assured, and the device is then deactivated.

Advantageously, the stem is attached to the element for securing the line of the hook.

Thanks to this characteristic, the line of the hook can be attached to the line of the rod in the same way as with any conventional float.

### BRIEF DESCRIPTION OF THE DRAWINGS

For a better understanding of all that has been outlined some drawings are attached which, schematically and solely by way of non-restrictive example, show a practical case of embodiment.

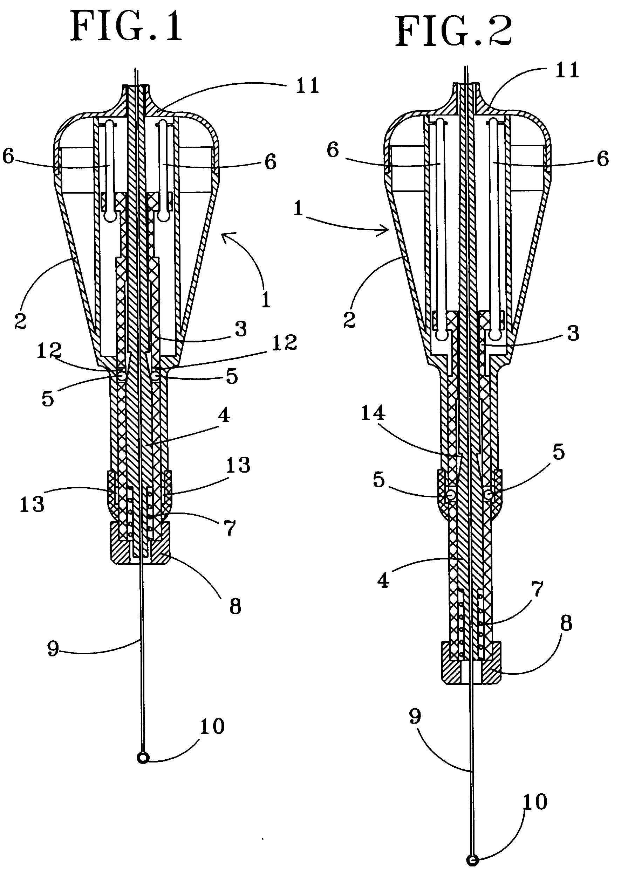

Figure 1 is a view of a float which is not activated, while Figure 2 shows the float activated and ready for use.

### DESCRIPTION OF A PREFERRED EMBODIMENT

As can be seen in Figures 1 and 2, the float 1 comprises a floating body 2 inside which are a bushing 3, a stem 4, at least one ball 5, first elastic means 6 and second elastic means 7.

Moreover, the interior bushing 3 is attached at its lower part to a cover 8. From the lower part of this bushing 3 there projects an element 9 at the end of which is a ring 10 provided for attaching the line of the hook (not shown).

To its upper part, the buoy has a body by way of cover 11 which closes the float at the top. This cover 11 allows to stretch the first elastic means 6, which are attached at their lower end to the interior bushing 3.

The float 1 functions in the following way. The bushing 3 and the cover 8 into which it is threaded are drawn downwards. The ball 5 housed in the compartment 12 is thereby inserted into the compartment 13, thus activating the traction device (Fig. 2).

Later, when a fish exerts a slight traction on the hook (not shown) which is attached to the element 9, which in turn passes through the stem 4, the region 14 of the aforesaid stem 4 which is slightly conical causes the ball 5 to come out of the space comprised by the compartments 12 and 13, and the bushing 3 then ascends suddenly towards its original rest position (Fig. 1).

Independent of the object of the invention are the materials used for manufacture of the components of the float, shapes and dimensions thereof and all accessory details which might be presented, as long as they do not affect its essential nature.

## Claims

1. Float (1) for fishing which comprises a body (2) by way of floating part, underneath which can be placed a hook with its corresponding line, characterized in that it comprises means of traction on the hook in order to retain any fish which bites on the hook.

2. Float (1), as claimed in Claim 1, characterized in that the means of traction on the hook comprise a device which moves with respect to the float (1).

3. Float (1), as claimed in Claim 2, characterized in that the device which is movable with respect to the float (1) comprises a bushing (3), a first elastic element (6) which attaches said bushing (3) to the body (2) of the float (1), a stem (4) with its upper end conically shaped (14), at least one ball (5), a second elastic element (7), and an element (9) for securing the line of the hook.

4. Float (1), as claimed in Claim 2, characterized in that the body (2) by way of floating part has an orifice (13) which can house the ball (5).

5. Float (1), as claimed in Claim 2, characterized in that the bushing (3) has an orifice (12) which can house the ball (5).

6. Float (1), as claimed in Claim 2, characterized in that the first elastic element (6) is attached, by its upper end, to the body (2) of the float (1) and, by its lower end, to the upper part of the bushing (3).

7. Float (1), as claimed in Claim 2, characterized in that the stem (4) is attached at the lower part to the element (9) for securing the line of the hook.

8. Float (1), as claimed in Claim 1, characterized in that it is able to keep the means of traction on the hook activated in a stable manner.
